# EUROPÄISCHE PATENTANMELDUNG

(11) **EP 2 412 218 A1**
(43) Veröffentlichungstag der Anmeldung: **01.02.2012**
(21) Anmeldenummer: 11401552.2
(22) Anmeldetag: 18.07.2011
(51) Int. Cl.: A01C 15/00, A01C 17/00

(54) **Zweischeibenstreuer**

(30) Priorität: 27.07.2010 DE 102010036635
(71) Anmelder: Amazonen-Werke H. Dreyer GmbH & Co. KG, 49205 Hasbergen (DE)
(72) Erfinder: Kleine-Hartlage, Hubertus, 49186 Bad Iburg (DE)

(57) **Zusammenfassung**

Zweischeibenstreuer zum Verteilen von Streugut, insbesondere Dünger, mit einem Streugutbehälter mit zwei trichterförmig zu je einem Boden (5) verlaufenden Auslauftrichter (4), mindestens je einer Auslassöffnung (6) in jedem Boden, je einem Rührwerk (16) im Behälter oberhalb jedes Bodens und einer unter jedem Boden angeordneten Schleuderscheibe (7) mit einer ein Eingangsgehäuse (8) aufweisenden Antriebsvorrichtung (9), wobei die Ruehrwerke in dem Eingangsgehäuse angeordneten Antriebsstrang über einen eine Kurbelstange (14) aufweisenden Exzentertrieb (12) angetrieben werden. Um einen kompakt bauenden Exzenterantrieb für den Antrieb des Ruehrwerks zu schaffen, ist vorgesehen, dass der Exzenterantrieb (12) in dem Eingangsgehäuse (8) angeordnet ist, dass die Kurbelstange (14) über ein eine Axialbewegung ermöglichendes Schiebelager (17) in dem Eingangsgehäuse gelagert ist.

## Beschreibung

Die Erfindung betrifft einen Zweischeibenstreuer gemäß des Oberbegriffes des Patentanspruches 1.

Ein derartiger Zweischeibenstreuer ist beispielsweise in der EP 1 559 305 B1 beschrieben. Dieser Streuer weist ein Eingangsgehäuse mit einer Antriebsvorrichtung auf. In dem Eingangsgehäuse ist ein Antriebsstrang angeordnet, über welchen ein eine Kurbelstange aufweisender Exzenterantrieb angetrieben werden kann. Über diesen Exzenterantrieb wird das Ruehrwerk angetrieben. Bei dem Ausführungsbeispiel gemäß Fig. 1 der EP 1 559 305 B1 ragt aus dem Eingangsgehäuse eine rotierend angetriebene Welle nach oben heraus. An dem oberen Ende dieser rotierend angetriebene Welle ist ein Exzenter angeordnet von dem aus über Verbindungsstangen die Rührorgane der Ruehrwerke angetrieben werden. Bei einem weiteren Ausführungsbeispiel der EP 1 559 305 B1 gemäß Fig. 8 und 9 ist ein Exzenter mit einer drehbar hin- und herschwingend angetriebenen Welle in einem Vorsatzgehäuse angeordnet.

Der Erfindung liegt die Aufgabe zu Grunde, einen kompakt bauenden Exzenterantrieb für den Antrieb des Ruehrwerks zu schaffen.

Diese Aufgabe wird erfindungsgemäß dadurch gelöst, dass der Exzenterantrieb in dem Eingangsgehäuse angeordnet ist, dass die Kurbelstange über ein eine Axialbewegung ermöglichendes Schiebelager in dem Eingangsgehäuse gelagert ist.

Infolge dieser Maßnahmen lässt sich ein sehr einfach aufgebauter Exzenterantrieb für ein Ruehrwerk schaffen. Aufgrund der Axialbewegung der Kurbelstange beansprucht der Antrieb nur sehr wenig Platz. Die Lagerung für die Kurbelstange mittels eines axialen Schiebelagers ist sehr einfach ausgestaltet.

Um die Kurbelstange gegenüber dem Gehäuse in einfacher Weise abzuschirmen, ist vorgesehen, dass die Kurbelstange mittels einer Dichtung gegenüber dem Eingangsgehäuse abgedichtet ist.

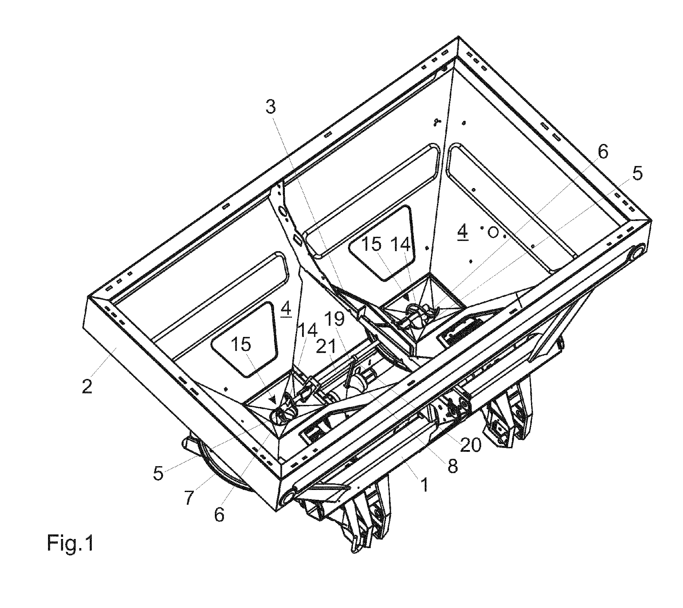

Weitere Einzelheiten der Erfindung sind der Beispielsbeschreibung und den Zeichnungen zu entnehmen. Hierbei zeigen
- Fig. 1: den Zweischeibenstreuer in der Ansicht von vorne oben in perspektivischer Darstellung,

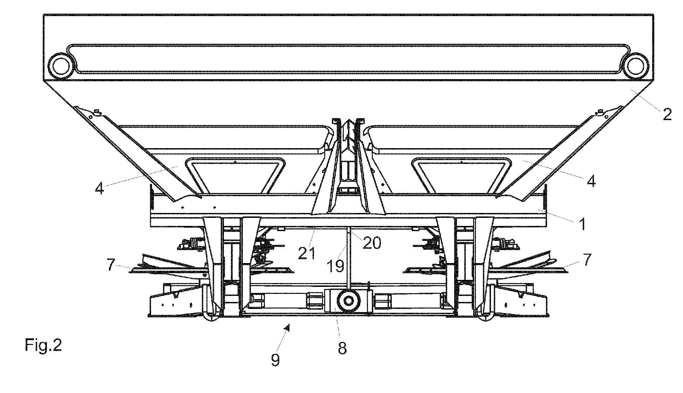

- Fig. 2: den Zweischeibenstreuer in der Ansicht von vorne,

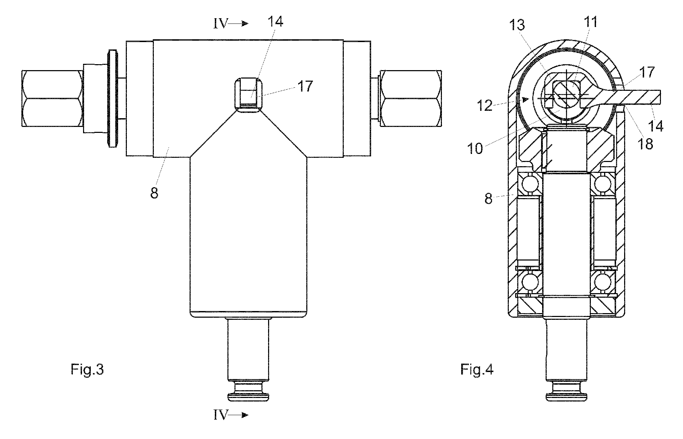

- Fig. 3: das Eingangsgehäuse mit dem Exzenterantrieb und der Kurbelstange in der Ansicht von oben und im vergrößertem Maßstab,
- Fig. 4: das Eingangsgehäuse mit dem Exzenterantrieb und der Kurbelstange im Schnitt IV - IV,

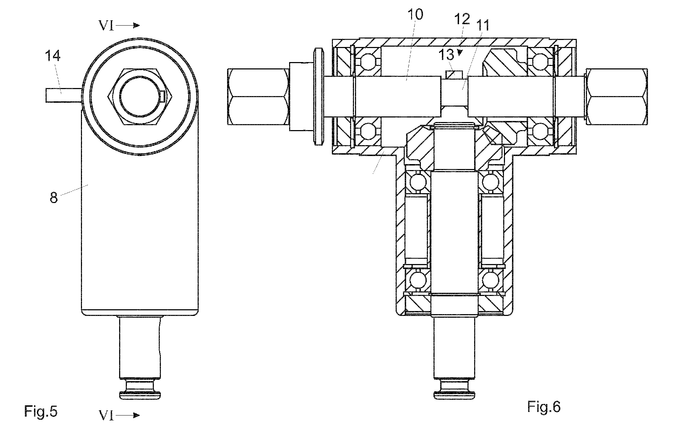

- Fig. 5: das Eingangsgehäuse mit dem Exzenterantrieb und der Kurbelstange in der Seitenansicht und im vergrößertem Maßstab und
- Fig. 6: das Eingangsgehäuse mit dem Exzenterantrieb und der Kurbelstange im Schnitt VI - VI.

Der Zweischeibenstreuer weist den Rahmen 1 und den Vorratsbehälter 2, dessen unterer Bereich durch ein dachförmiges Mittelteil 3 in zwei Auslauftrichter 4 aufgeteilt ist, auf. Jeder Auslauftrichter 4 ist mit einem Boden 5 abgeschlossen, in dem jeweils eine Auslassöffnung 6 angeordnet ist. Unterhalb jedes Bodens 5 ist eine rotierend angetriebene Schleuderscheibe 7 angeordnet. Die Schleuderscheibe 7 wird von einer ein Eingangsgehäuse 8 aufweisenden Antriebsvorrichtung 9 rotierend angetriebenen.

In dem Eingangsgehäuse 8 ist der Antriebswelle 10 ein Exzenter 11 eines Exzenterantriebes 12 zugeordnet. Dieser Exzenter 11 des Exzenterantriebes 12 arbeitet antriebsmäßig mit einer Gabel 13 des Exzenterantriebes 12 zusammen. Diese Gabel 13 ist an einer Kurbelstange 14 befestigt. Die Kurbelstange 14 ist Bestandteil des Antriebstranges des Exzenterantriebes 12 zum Antrieb der Rührorgane 15 des Ruehrwerkes 16 des Zweischeibenstreuers. Die Kurbelstange 14 ist über ein eine Axialbewegung der Kurbelstange 14 ermöglichendes Schiebelager 17 in dem Eingangsgehäuse 8 gelagert.

Weiterhin ist die Kurbelstange 14 mittels einer Dichtung 18 gegenüber dem Eingangsgehäuse 8 abgedichtet angeordnet.

Das obere Ende 19 der Kurbelstange 14 ist mit einer Gelenkanordnung an dem Hebel 20 der Rührwelle 21 des Rührwerkes 16 befestigt, wie in Fig. 1 zu erkennen ist. Hierzu ist in der Fig. 1 die Platte des dachförmigen Mittelteiles 3 auf der in Fahrtrichtung gesehen rechten Seite des dachförmigen Mittelteiles ausgeblendet.

Aufgrund des Exzenters 11 und der Gabel 13 des Exzenterantriebs 12 wird bei einem Antrieb der Antriebswelle 10 die Kurbelwelle 14 in hin- und hergehender Bewegung versetzt, so dass die Rührwelle 21 mit den Rührorganen 15 in hin- und herschwingende Bewegung versetzt wird.

## Patentansprüche

1. Zweischeibenstreuer zum Verteilen von Streugut, insbesondere Dünger, mit einem Streugutbehälter mit zwei trichterförmig zu je einem Boden verlaufenden Auslauftrichter, mindestens je einer Auslassöffnung in jedem Boden, je einem Rührwerk im Behälter oberhalb jedes Bodens und einer unter jedem Boden angeordneten Schleuderscheibe mit einer ein Eingangsgehäuse aufweisenden Antriebsvorrichtung, wobei die Ruehrwerke in dem Eingangsgehäuse angeordneten Antriebsstrang über einen eine Kurbelstange aufweisenden Exzentertrieb angetrieben werden, **dadurch gekennzeichnet, dass** der Exzenterantrieb (12) in dem Eingangsgehäuse (8) angeordnet ist, dass die Kurbelstange (14) über ein eine Axialbewegung ermöglichendes Schiebelager (17) in dem Eingangsgehäuse (8) gelagert ist.

2. Zweischeibenstreuer nach Anspruch 1, **dadurch gekennzeichnet, dass** die Kurbelstange (14) mittels einer Dichtung (19) gegenüber dem Eingangsgehäuse (8) abgedichtet ist.
